# EUROPÄISCHE PATENTSCHRIFT

(11) **EP 2 196 090 B1**
(45) Veröffentlichungstag und Bekanntmachung des Hinweises auf die Patenterteilung: **01.02.2012**
(21) Anmeldenummer: 08405302.4
(22) Anmeldetag: 12.12.2008
(51) Int. Cl.: A01N 47/28, A01N 59/16, A61L 101/32, A61L 101/42

(54) **Viruzides Desinfektionsmittel**
Virucidal disinfectant
Désinfectant virucide

(43) Veröffentlichungstag der Anmeldung: 16.06.2010
(73) Patentinhaber: Oro Clean Chemie AG, 8320 Fehraltorf (CH)
(72) Erfinder: Ionidis, Georgios, 8050 Zürich (CH)

(56) Entgegenhaltungen:
- EP-A- 0 251 303
- EP-A- 1 125 497
- EP-A- 1 685 854
- WO-A-2004/021968
- WO-A-2007/095008
- JP-A- 2008 255 101

## Beschreibung

### Technisches Gebiet

Die Erfindung betrifft ein viruzides Desinfektionsmittel auf alkoholisch-wässriger Basis, zur hygienischen und/oder chirurgischen Händedesinfektion, wobei eine alkoholische Hauptkomponente einen Anteil von mindestens 50 Gew.-% und weniger als 80 Gew.-% aufweist und wenigstens eine saure Verbindung und Harnstoff vorliegt.

### Stand der Technik

Desinfektionsmittel haben in den letzten Jahren weiter an Bedeutung gewonnen. So werden in medizinischen Bereichen, z. B. in Krankenhäusern oder Arztpraxen, als auch in der Lebensmittel- und Pharmaindustrie oder an Orten mit hohem Publikumsaufkommen, wie beispielsweise in Schwimmbädern oder öffentlichen Toiletten, vermehrt Desinfektionsmittel auf regelmässiger Basis eingesetzt. Dadurch können Mensch und Tier vor Krankheitserregern wie Bakterien, Pilze oder Viren geschützt werden und die Ausbreitung der Krankheitserreger kann stark eingedämmt werden. Dies ist insbesondere im Hinblick auf drohende Pandemien von grosser Bedeutung.

Besonders wichtig in diesem Zusammenhang ist eine wirksame Desinfektion der Hände, da diese als Überträger von Krankheitserregern an vorderster Stelle stehen. Eine konsequente Händehygiene ist deshalb eine der wichtigsten Massnahmen zur Verhütung von Infektionen und Krankheiten.

Eine wirkungsvolle Händehygiene besteht aus dem Händewaschen, bzw. der Keimverminderung auf der Hautoberfläche auf mechanischem Weg, und der Desinfektion, welche zur gezielten Abtötung bzw. Schädigung bestimmter Mikroorganismen bzw. Krankheitserreger führt. Je nach Situation kann es ausreichend sein, eine rein hygienische Händedesinfektion durchzuführen, bei welcher die transiente (vorübergehend auf der Haut vorhandene) Flora der Hände (vor allem pathogene Keime) eliminiert werden. Um eine nahezu vollständige Keimfreiheit zu erzielen, kann bei der chirurgischen Händedesinfektion zusätzlich zur transienten Flora auch die residente (normale) Flora der Hände reduziert werden.

Gegen Bakterien, Pilze und behüllte Viren (Viren mit Lipoproteinhüllen) existiert heute ein breites Spektrum an kommerziell erhältlichen Desinfektionsmitteln auf Alkoholbasis. Die meisten dieser Desinfektionsmittel sind aber nur bedingt wirksam und decken insbesondere nicht das gesamte Spektrum an relevanten Viren ab. Im Besonderen unbehüllte Viren, wie z. B. Picornaviren, sind aufgrund der Abwesenheit einer Virushülle gegenüber einzelnen Alkoholen relativ stabil und werden entsprechend durch derartige Desinfektionsmittel nicht oder nur ungenügend inaktiviert. Eine wirksame Inaktivierung ist aber insbesondere bei Viren von grosser Bedeutung. Viren können nämlich bei Mensch und Tier schon in geringsten Konzentrationen zu ernsthaften Erkrankungen führen, für welche es zudem oftmals keine wirksame Behandlungsmethode gibt.

Mit Vorteil werden daher sogenannte viruzide Desinfektionsmittel eingesetzt, welche sowohl gegen behüllte Viren als auch gegen unbehüllte Viren wirksam sind. Im Allgemeinen schliesst dabei bei alkoholischen Desinfektionsmitteln eine Wirksamkeit gegen unbehüllte Viren auch eine Wirksamkeit gegen sämtliche behüllten Viren mit ein. Gemäss der Norm EN 14476 (aus dem Jahre 2005) gilt ein Desinfektionsmittel als viruzid, wenn es in der Lage ist, die folgenden unbehüllten Virenstämme unter definierten Testbedingungen zu inaktivieren:
- Poliovirus Typ 1, LSc - 2ab
- Adenovirus Typ 5, Stamm Adenoid 75, ATCC VR-5

Die Leitlinie der Deutschen Vereinigung zur Bekämpfung der Viruskrankheiten (DVV) e.V. und des Robert Koch-Institut (RKI) in der Fassung aus dem Jahr 2005 (DVV/RKI-Leitlinie) fordert für viruzide Desinfektionsmittel ein erweitertes Testverfahren, bei welchem zusätzliche unbehüllte als auch behüllte Virenstämme berücksichtigt werden:
- Vacciniavirus, Stamm Elstree
- Poliovirus Typ 1, LSc - 2ab
- Adenovirus Typ 5, Stamm Adenoid 75
- Polyomavirus (SV 40), Stamm 777

Von einer wirksamen Inaktivierung wird gesprochen, wenn das Desinfektionsmittel innerhalb definierter Einwirkzeiten in der Lage ist, den Virustiter (entspricht der Menge der in einem Zellkulturlysat pro Volumeneinheit vorhandenen infektiösen Viren) der Prüfvirenstämme um mindestens 4 dezimallogarithmische Stufen bzw. 4 Log-Stufen zu verringern. Eine Reduktion um eine Log-Stufe entspricht einer zehnfachen bzw. 90 %-igen Reduktion der Virenstämme. Entsprechend entspricht eine Reduktion um 4 Log-Stufen einer 10⁴-fachen bzw. 99.99 %-igen Reduktion der Virenstämme. Sind anfänglich beispielsweise 10⁶ Virenstämmen vorliegend, überleben bei einer Reduktion um 4 LogStufen lediglich 10² Virenstämme.

Für die Händedesinfektion gelten gemäss der Norm EN 14476 Einwirkzeiten von 30 Sekunden, 1 Minute oder 3 Minuten für die Inaktivierung der Virenstämme bzw. die Reduktion der Virenstämme um 4 Log-Stufen. Bei der DVV/RKI-Leitlinie sind leicht verschiedene Einwirkzeiten von 30 Sekunden, 1 Minute, 2.5 Minuten oder 5 Minuten (falls erforderlich auch 1.5 und 2 Minuten) einzuhalten. Für die Desinfektion von Oberflächen und Instrumenten, z. B. medizintechnische Instrumente, gelten längere Einwirkzeiten. Aus praktischen Gründen sind für die Händedesinfektion möglichst kurze Einwirkzeiten wünschenswert. Idealerweise ist ein viruzides Desinfektionsmittel in der Lage, eine Reduktion um 4 Log-Stufen innerhalb 1 Minute zu bewirken. Bei längeren Einwirkzeiten besteht die Gefahr, dass diese vom Benutzer nicht eingehalten werden.

Von den vorstehend genannten Prüfvirenstämmen ist insbesondere das Poliovirus Typ 1, LSc - 2ab hochresistent gegenüber Chemikalien, weitgehend säurestabil und unbeeinflusst durch lipide Lösungsmittel (z. B. Ether oder Reinigungsmittel). Desinfektionsmittel auf Alkoholbasis, welche in der Lage sind, den Poliovirus Typ 1, LSc - 2ab zu inaktivieren, sind mit hoher Wahrscheinlichkeit auch gegen das Vacciniavirus, Stamm Elstree, das Adenovirus Typ 5, Stamm Adenoid 75 und das Polyomavirus (SV 40), Stamm 777, wirksam.

Die gemäss der Norm EN 14476 (aus dem Jahre 2005) als viruzid eingestufte Desinfektionsmittel erfüllen daher mit hoher Wahrscheinlichkeit auch die Erfordernisse der DVV/RKI-Leitlinie.

Aus der EP 0 251 303 B1 (Krüger GmbH & Co. KG) ist z. B. ein viruzides Desinfektionsmittel mit Breitbandwirkung bekannt, welches aus mindestens 70 Gew.-% Ethanol und/oder Propanol und 0.5 - 5 Gew.-% einer kurzkettigen Mono-, Di- und Tricarbonsäure oder Sulfaminsäure besteht, bekannt. Das Desinfektionsmittel zeigt eine virusinaktivierende Wirkung gegenüber dem Poliovirus Typ 1, Stamm Mahoney, auf. Das Poliovirus Typ 1, Stamm Mahoney, zeigt im Vergleich mit dem Poliovirus Typ 1, LSc - 2ab aber eine signifikant geringere Resistenz und ist daher im Allgemeinen einfacher zu inaktivieren. Ob die Desinfektionsmittel der EP 0 251 303 B1 (Krüger GmbH & Co. KG) auch gegenüber dem Pollovirus Typ 1, LSc - 2ab ausreichend wirksam sind und die Norm EN 14476 (aus dem Jahre 2005) oder die DVV/RKI-Leitlinie aus dem Jahr 2005 erfüllen, ist daher fraglich.

Die WO 2008/049454 A1 (Ecolab Inc.) beschreibt ein Desinfektionsmittel mit einem Alkoholgehalt von 80 % oder mehr, welches zudem organische Säuren und alkoxylierte Mono- und/oder Diglyzeride enthält. Das Desinfektionsmittel ist insbesondere wirksam gegen das Poliovirus Typ 1, LSc - 2ab und erfüllt die Erfordernisse der DW/RKI-Leitlinie. Desinfektionsmittel mit einem derartig hohen Alkoholgehalt haben jedoch entscheidende Nachteile. So liegt der Flammpunkt meist sehr niedrig, wodurch beim Transport, der Lagerung und der Verwendung spezielle Vorsichtmassnahmen zu treffen sind.

Die EP 1 685 854 A1 (B. Braun Medical AG) betrifft ein viruzides Desinfektionsmittel mit Breitbandwirkung auf der Basis von Alkohol, sauren Phosphorverbindungen und Polyalkylenglykolen. Das Desinfektionsmittel erfüllt ebenfalls die Erfordernisse der DVV/RKI-Richtlinie, ist aber relativ sauer, was beim Benutzer Hautrötungen, Juckreiz oder Brennen hervorrufen kann.

In der WO 91/35475 (Antiseptica Chemisch-Pharmazeutische Produkte GmbH) sind viruzide Händedesinfektionsmittel beschrieben, welche ca. 50 - 60 Vol.-% an niederen Alkoholen aufweisen und zur Erhöhung der viruziden Wirkung beispielsweise mit 3 - 10 Vol.-% an Diolen versetzt sind. Die Diolen bleiben jedoch bei der Händedesinfektion zumindest teilweise auf der Haut zurück und können ein unangenehmes Hautgefühl hervorrufen. Bezüglich welcher Virenstämme diese Desinfektionsmittel wirksam sind und ob beispielsweise die Norm EN 14476 (aus dem Jahre 2005) oder die DW/RKI-Leitlinie aus dem Jahr 2005 erfüllt wird, ist unklar.

Die EP 1 125 497 (Kesla Forschung und Service KG) beschreibt ein Mittel zur viruziden Händedesinfektion, basierend auf einem aliphatischen Alkohol, einem Acetat des Glycerins oder des Glycols und Peressigsäure.

Gegenstand der WO 2004/021968 (Galderma) ist eine organische Lösung zur Beförderung von Wirkstoffen unter die Haut oder unter den Nagel. Diese Lösung besteht aus einem organischen Lösungsmittel (bevorzugt aus einem Alkohol), Harnstoff und einer Säure.

In der WO 2007/095008 (Gojo) wird ein Desinfektionsmittel auf der Basis eines Alkohols und einer Auswahl an Wirksubstanzen, u.a. Protonen-Donoren, Polymere und chaotropische Substanzen beschrieben.

Die JP 2008-255101 (Maruishi Pharma) enthält ein Haut-Desinfektionsmittel, basierend auf einem Alkohol, einer sauren Komponente und einer Zinkverblndung.Offensichtlich vermögen die bekannten viruziden Desinfektionsmittel nicht vollständig zu befriedigen. Es besteht deshalb nach wie vor Bedarf nach viruziden Desinfektionsmitteln, welche die vorstehend genannten Nachteile nicht aufweisen.

### Darstellung der Erfindung

Aufgabe der Erfindung ist es daher, ein dem eingangs genannten technischen Gebiet zugehörendes viruzides Desinfektionsmittel zu schaffen, welches gegenüber möglichst vielen unterschiedlichen Krankheitserregern eine verbesserte Wirkung aufweist und insbesondere hautverträglich ist.

Die Lösung der Aufgabe ist durch die Merkmale des Anspruchs 1 definiert. Gemäss der Erfindung enthält das viruzide Desinfektionsmittel Harnstoff.

Unter sauren Verbindung bzw. Säuren werden in diesem Zusammenhang chemische Verbindungen verstanden, welche insbesondere im Sinne einer Brønstedtsäure als Protonendonoren und/oder in Form einer Lewissäure als elektrophile Elektronenakzeptoren fungieren. Die saure Verbindung kann dabei beispielsweise als organisch-chemische und/oder als eine anorganisch-chemische Verbindung vorliegen, wobei ein Anteil der sauren Verbindung im Desinfektionsmittel unter anderem durch die Säurestärke bzw. den pKₛ-Wert mitbestimmt wird. Die saure Verbindung weist insbesondere einen pKₛ-Wert von 3 - 5, besonders bevorzugt 3.5 - 4.0, auf. Unter dem pKₛ Wert ist der negative dekadische Logarithmus der Gleichgewichtskonstanten Kₛ der sauren Verbindung in Wasser bei einer Temperatur von25°C zu verstehen.

Ein minimaler Anteil an saurer Verbindung beträgt vorzugsweise wenigstens 0.1 Gew.-%. Derartige minimale Anteile haben sich auch bei stark sauren Verbindungen als zweckmässig erwiesen. Der minimale Anteil an saurer Verbindung ist jedoch unter anderem von der Säurestärke der sauren Verbindung abhängig und kann daher variieren.

Unter Harnstoff wird in diesem Zusammenhang das Kohlensäurediamid mit der Summenformel CH₄N₂O verstanden. Harnstoff, nicht zu verwechseln mit Harnsäure, wird unter anderem auch als Carbamid, Carbonyldiamid, Diamid der Kohlensäure und/oder Urea bezeichnet. In der Praxis beträgt ein minimaler Anteil an Harnstoff insbesondere wenigstens 0.2 Gew.-%.

Sämtliche Angaben bezüglich Gewichtsprozenten bzw. Gew.-% von einzelnen Komponenten der erfindungsgemässen Desinfektionsmittel beziehen sich auf das Gesamtgewicht des verwendbaren bzw. einsatzbereiten Desinfektionsmittels.

Es hat sich überraschenderweise gezeigt, dass Desinfektionsmittel, basierend auf der Kombination von alkoholischer Hauptkomponente mit wenigstens einer sauren Verbindung und Harnstoff, eine äusserst gute viruzide Wirksamkeit, insbesondere gegen das Poliovirus (Typ 1, LSc - 2ab), aufweisen. Die Kombination der drei Komponenten weist dabei eine erheblich grössere viruzide Wirkung auf, als die Einzelkomponenten für sich. Es liegt daher in Bezug auf die Viruzidie ein positiver synergetischer Effekt vor. Zudem hat sich erwiesen, dass mit derartigen Desinfektionsmitteln die in der vorstehend erwähnten Norm EN 14476 (aus dem Jahre 2005) geforderte Reduktion der Virenstämme um 4-Logstufen bzw. eine 99.99 %-ige Reduktion der Virenstämme bereits ab einer Einwirkzeit von 1 Minute erreicht werden kann. Bei längeren Einwirkzeiten sind Reduktionen von mehr als 5-Logstufen bzw. mehr als 99.999 %-ige Reduktionen der Virenstämme möglich.

Wie vorstehend bereits ausgeführt, ist das Poliovirus Typ 1, LSc - 2ab ein sehr hartnäckig und schwierig zu inaktivierendes Virus, da es insbesondere hochresistent gegenüber Chemikalien, weitgehend säurestabil und unbeeinflusst durch lipide Lösungsmittel (z. B. Ether oder Reinigungsmittel) ist. Da die erfindungsgemässen Desinfektionsmittel in der Lage sind, den Poliovirus Typ 1, LSc - 2ab zu inaktivieren, sind sie mit hoher Wahrscheinlichkeit auch gegen das Vacciniavirus, Stamm Elstree, das Adenovirus Typ 5, Stamm Adenoid 75 und das Polyomavirus (SV 40), Stamm 777, wirksam.

Der Anteil der alkoholischen Hauptkomponente von mindestens 50 Gew.-% und weniger als 80 Gew.-% gewährleisten eine viruzide Wirkung des Desinfektionsmittels, ohne dass bei Transport, der Lagerung und der Verwendung keine speziellen Vorsichtmassnahmen zu treffen wären. Mit Vorteil beträgt der Anteil der alkoholischen Hauptkomponente wenigstens 60 Gew.-%. Besonders bevorzugt liegt der Anteil der alkoholischen Hauptkomponente jedoch bei 65 - 75 Gew.-%.

Darüber hinaus haben sich die erfindungsgemässen Desinfektionsmittel zudem als sehr gut hautverträglich erwiesen. Insbesondere durch die synergetische Wirkung des Harnstoffs mit der sauren Verbindung können die Konzentrationen dieser beiden Komponenten relativ niedrig gehalten werden. Hautrötungen, Juckreiz, Brennen oder dergleichen treten daher auch bei regelmässiger Verwendung der erfindungsgemässen Desinfektionsmittel über längere Zeiträume kaum auf. Des Weiteren bleiben aufgrund der Zusammensetzung des erfindungsgemässen Desinfektionsmittels keine unangenehmen oder das Hautgefühl beeinträchtigenden Rückstände auf der Haut zurück.

Da Harnstoff im natürlichen Feuchthaltefaktor der menschlichen Haut enthalten ist, ist dieser grundsätzlich mit menschlicher Haut kompatibel und stellt kein grundlegendes Gesundheitsrisiko dar.

Die erfindungsgemässen Desinfektionsmittel sind zudem lagerstabil und entsprechend relativ problemlos haltbar. Ausfällung von Feststoffen und/oder Veränderungen in der chemischen Zusammensetzung bzw. Zersetzungsprodukte sind auch nach mehreren Wochen im Wesentlichen nicht feststellbar. Damit ist die Gefahr, dass in der Praxis zersetzte und nicht mehr ausreichend wirksame Desinfektionsmittel verwendet werden oder dass sich im Desinfektionsmittel unerwünschte und allenfalls schädliche Nebenprodukte bilden, kaum vorhanden.

Besonders bevorzugt weist der Harnstoff einen Anteil von 0.2 - 8 Gew.-%, idealerweise 1.75 - 3.25 Gew.-% auf. Derartige Anteile gewährleisten insbesondere eine ausreichende viruzide Wirkung. Zudem hat sich ein Harnstoffanteil von maximal 8 % als hautverträglich erwiesen. Grundsätzlich ist es aber auch möglich, weniger als 0.2 Gew.-% Harnstoff vorzusehen. Die viruzide Wirkung des Desinfektionsmittels ist dann aber geringer, was unter Umständen durch eine Erhöhung des Anteils an sauren Verbindungen teilweise kompensiert werden kann. Damit verbunden nimmt im Allgemeinen jedoch der pH-Wert des Desinfektionsmittels ab bzw. das Desinfektionsmittel wird saurer, was weniger hautverträglich ist. Mehr als 8 Gew.-% Anteil des Harnstoffs sind prinzipiell auch möglich. Damit wird jedoch die Gefahr von Hautirritationen vergrössert. Ein Anteil des Harnstoffs von 1.75 - 3.25 Gew.-% hat sich als optimal erwiesen. Dabei wird sowohl eine gute viruzide Wirkung als auch eine sehr gute Hautverträglichkeit erhalten.

Besonders bevorzugt ist zusätzlich wenigstens ein Zinksalz enthalten. Grundsätzlich können anorganische Zinksalze und/oder organische Zinksalze eingesetzt werden, welche insbesondere im Desinfektionsmittel löslich sind. Dabei können durchaus auch Mischungen aus mehreren unterschiedlichen Zinksalzen eingesetzt werden. Überraschenderweise hat sich gezeigt, dass durch das Zusammenspiel eines Zinksalzes mit dem Harnstoff und der sauren Verbindung ein zusätzlicher positiver synergetischer Effekt in Bezug auf die viruzide Wirkung des erfindungsgemässen Desinfektionsmittels erreicht wird. Des Weiteren hat sich gezeigt, dass durch die Zugabe von Zinksalzen teilweise unangenehme Hautgerüche und Hautirritationen reduziert werden.

Es ist aber grundsätzlich auch möglich, anstelle oder zusätzlich zum Zinksalz andere Metallsalze und/oder Metalle einzusetzen. Als Metallsalze kommen insbesondere Silber-, Lanthan-, Cer-, Cäsium-, Kupfer-, und/oder Aluminium-Salze in Frage. Konkrete Vertreter sind z. B. NaCl, CsCl, CuCl₂ und/oder CaCO₃ oder Natrium-Pyrrolidoncarboxylat. Geeignete Metalle können z. B. Hauptgruppenmetalle, wie Aluminium, Gallium und/oder Indium, sein. Ebenso können Übergangsmetalle, wie beispielsweise Scandium, Ytrium, Lanthan, Erbium, Kupfer, Silber, Gold, Cadmium und/oder Quecksilber eingesetzt werden. Diese Metallsalze und/oder Metalle bringen jedoch nicht den gleichen Effekt mit sich wie die Zinksalze und/oder weisen anderweitig Nachteile, wie beispielsweise mangelnde Hautverträglichkeiten, auf.

Mit Vorteil umfasst das wenigstens eine Zinksalz ein organisches Zinksalz. Organische Zinksalze haben sich als weniger korrosiv und besser hautverträglich herausgestellt als anorganische Zinksalze. Anorganische Zinksalze in Desinfektionsmitteln können auch bei ausreichender Hautverträglichkeit problematisch sein. Werden nämlich nach erfolgter Händedesinfektion metallische Instrumente oder Geräte berührt, besteht die Gefahr, dass diese im Laufe der Zeit korrosiv angegriffen werden. Dieser Nachteil tritt bei der Verwendung von organischen Zinksalzen nicht auf.

Überraschenderweise hat sich zudem gezeigt, dass Harnstoff ein exzellenter Lösungsvermittler für organische Zinksalze in Alkoholen ist. Die im Allgemeinen eher geringe Löslichkeit von organischen Zinksalzen in Lösungen mit hohem Alkoholgehalt kann somit im Zusammenspiel mit Harnstoff erheblich gesteigert werden, was wiederum eine erhöhte Lagerstabilität mit sich bringt.

Es ist prinzipiell jedoch möglich, anstelle der organischen Zinksalze oder zusammen mit den organischen Zinksalzen auch anorganische Zinksalze vorzusehen.

Geeignete organische Zinksalze sind nicht abschliessend z. B.: Zink-Acetat, Zink-Butyrat, Zink-Glycolat, Zink-Formiat, Zink-Lactat, Zink-Picolinat, Zink-Propanoat, Zink-Salicylat, Zink-Tartarat, Zink-Undecylenat, Zink-Rizinoleat und/oder Zink-Pyrrolidoncarboxylat, Als anorganisches Zinksalz kann z. B. ZnCl₂ eingesetzt werden.

Als besonders Vorteilhaft hat sich als organisches Zinksalz Zink-Pyrrolidoncarboxylat (Abkürzung: Zn-PCA; Summenformel: C₅H₆NO₃Zn) herausgestellt. Zink-Pyrrolidoncarboxylat ist das Zinksalz der Pyrrolidoncarbonsäure (auch Pyroglutaminsäure genannt), welche als chirale Verbindung als L- und als D-Enantiomer vorkommt. Wie sich gezeigt hat, verstärkt Zink-Pyrrolidoncarboxylat die viruzidale Wirkung in hohem Masse und ist dennoch sehr gut hautverträglich. Letzteres dürfte mit der Tatsache zusammen hängen, dass das Natriumsalz der L-Pyrrolidoncarbonsäure, Na-Pyrrolidoncarboxylat (Akürzung: Na-PCA), als natürlicher Feuchthaltefaktor der menschlichen Haut vorkommt. Zink-Pyrrolidoncarboxylat kann alleine oder mit anderen vorstehend genannten Zinksalzen, Metallsalzen und/oder Metallen zusammen eingesetzt werden.

Ein weiteres vorteilhaftes organisches Zinksalz ist Zink-Rizinoleat, welches anstelle oder zusätzlich zu Zink-Pyrrolidoncarboxylat, gegebenenfalls mit weiteren Zinksalzen, eingesetzt werden kann.

Besonders bevorzugt sind jedoch Desinfektionsmittel, welche zusätzlich zur alkoholischen Hauptkomponente und der sauren Verbindung sowohl Harnstoff als auch organische Zinksalze enthalten. In diesem Fall kann der positive synergetische Effekt bezüglich der viruziden Wirkung zusätzlich gesteigert werden.

Bevorzugt beträgt ein Anteil des wenigstens einen Zinksalzes 0.2 - 2 Gew.-%. Derartige Anteile verstärken die viruziden Wirkung des Desinfektionsmittels in optimaler Weise. Grössere Anteile als 2 Gew.-% sind zwar grundsätzlich möglich, steigern die viruzide Wirkung aber nur noch bedingt und sind entsprechend unökonomisch. Des Weiteren kann es bei Anteilen von mehr als 2 Gew.-% zu Problemen mit der Löslichkeit der Zinksalze kommen. Anteile von höchstens 2 Gew.-% sind auch bei der Verwendung von anorganischen Zinksalzen, welche in der Regel relativ korrosiv sind, ausreichend hautverträglich. Bei geringeren Anteilen als 0.2 Gew.-% an Zinksalz nimmt der synergetische Effekt rasch ab, was nur bedingt durch eine Erhöhung des Anteils an sauren Verbindungen und/oder Harnstoff teilweise ausgeglichen werden kann.

Die alkoholische Hauptkomponente besteht insbesondere aus einwertigen Alkoholen, welche mit Vorteil wenigstens 2 und höchstens 4 Kohlenstoffatome aufweisen. Bevorzugt handelt es sich um Ethanol und/oder 1-Propanol und/oder 2-Propanol. Desinfektionsmittel mit derartigen Alkoholen haben sich, insbesondere in Kombination mit den übrigen Komponenten, als besonders geeignet und wirksam erwiesen. In einer besonders bevorzugten Variante besteht die alkoholische Hauptkomponente aus einer Mischung aus Ethanol und 2-Propanol, wobei Ethanol mit Vorteil einen grösseren Anteil aufweist als 2-Propanol. Das Gewichtsverhältnis von Ethanol zu 2-Propanol liegt idealerweise im Bereich von 60:10 bis zu 80:3.

In einer ebenfalls bevorzugten Variante besteht die alkoholische Hauptkomponente aus einer Mischung aus Ethanol und 1-Propanol, wobei Ethanol mit Vorteil einen grösseren Anteil aufweist als 1-Propanol. Das Gewichtsverhältnis von Ethanol zu 1-Propanol liegt idealerweise ebenfalls im Bereich von 60:10 bis zu 80:3.

Insbesondere kann die alkoholische Hauptkomponente auch aus einer Mischung aus Ethanol und 1-Propanol und 2-Propanol bestehen, wobei Ethanol mit Vorteil einen grösseren Gewichtsanteil aufweist als 1-Propanol und 2-Propanol zusammen.

Prinzipiell können auch andere einwertige Alkohole verwendet werden. In Frage kommen z. B. Methanol, Butanol und/oder Benzylalkohol. Insbesondere wegen erhöhter Toxizität und/oder geringerer viruziden Wirksamkeit sind diese Vertreter aber weniger vorteilhaft. Auch denkbar ist es, zusätzlich oder anstelle der einwertigen Alkohole mehrwertige Alkohole in der alkoholischen Hauptkomponente vorzusehen. Dabei wird jedoch die viruzide Wirksamkeit des Desinfektionsmittels unter Umständen verringert. Teilweise können die Rückstände von Desinfektionsmittel mit mehrwertigen Alkoholen auch unangenehme Hautgefühle hervorrufen.

Vorteilhafterweise umfasst die wenigstens eine saure Verbindung eine organische Säure, wobei ein Anteil der organischen Säure bevorzugt 0.2 - 3 Gew.-% beträgt. Unter organischen Säuren werden in diesem Zusammenhang insbesondere Carbonsäuren verstanden, welche eine Carboxylgruppe R-COOH tragen. Carbonsäuren haben sich als besonders geeignete Vertreter der sauren Verbindungen erwiesen, welche in Kombination mit der alkoholischen Hauptkomponenten und dem Harnstoff und/oder dem Zinksalz die viruzide Wirkung des Desinfektionsmittels erhöhen und gleichzeitig eine gute Hautverträglichkeit ergeben. Die Säurestärke bzw. die pKS-Werte von Carbonsäuren liegen zudem in einem Bereich, welcher eine gut kontrollierbare Dosierung zulässt.

Prinzipiell ist es aber auch möglich, anstelle oder zusätzlich zu den Carbonsäuren andere sauer wirkende Verbindungen vorzusehen. So können insbesondere Phenole, Naphtole, Enole (wie z. B. Ascorbinsäure), Sulfate bzw. Schwefelsäureester, Sulfonsäuren, Thiole, Phosphate bzw. Phosphorsäureester und/oder Phosphorsäure als saure Verbindungen eingesetzt werden. Teilweise weisen diese sauren Verbindungen aber keine ausreichende viruzide Wirkung auf und/oder sie sind aus gesundheitlicher Sicht problematisch.

Ebenso ist es denkbar, Mineralsäuren als saure Verbindungen zu verwenden. Diese, verglichen mit den organischen Säuren, in der Regel sehr starken Säuren sind aber vor allem bezüglich Hautverträglichkeit heikel.

Insbesondere beinhaltet die wenigstens eine organische Säure Milchsäure und/oder Glykolsäure. Bevorzugt umfasst die saure Verbindung des Desinfektionsmittels ausschliesslich Milchsäure und/oder Glykolsäure. Die Beimischung dieser beiden Säuren hat sich als sehr vorteilhaft erwiesen, da diese beiden organischen Säuren nebst einer optimalen Säurestärke bzw. einem optimalen pKₛ-Wert zusätzlich eine hautpflegende Wirkung mit sich bringen. Bei der Milchsäure handelt es sich vorzugsweise um L(+)-Milchsäure, da diese beispielsweise in menschlichem Schweiss, Blut und Muskelserum vorkommt und zudem Bestandteil des natürlichen Feuchthaltefaktors der menschlichen Haut ist.

Glykolsäure bzw. Hydroxyessigsäure verbessert im Zusammenspiel mit der Milchsäure die viruzide Wirkung des Desinfektionsmittels und ruft zugleich hautpflegende Effekte hervor. Insbesondere kann durch die Zugabe von Glykolsäure die Hauterscheinung verbessert werden. In einer weiter bevorzugten Ausführungsform beinhaltet die wenigstens eine organische Säure daher eine Mischung aus Milchsäure und Glykolsäure, wobei das Gewichtsverhältnis Verhältnis von Milchsäure zu Glykolsäure insbesondere 1.0 : 1.0 bis 2.0 : 0.2, bevorzugt 1.3 : 0.7 bis 1.4 : 0.6, beträgt.

Weiter bevorzugt enthält das Desinfektionsmittel wenigstens eine zusätzliche Hautpflegekomponente, wobei als Hautpflegekomponente insbesondere Hautbefeuchtungsmittel, Mittel zur Erhöhung der Geschmeidigkeit der Haut und/oder Vitamine vorliegen.

Als zusätzliche Hautpflegekomponenten sind z. B. eine oder mehrere Substanzen aus der folgenden Gruppe geeignet: Glycerol bzw. Glycerin, Propan-1,2-diol, Butan-1,3-diol, Sorbitol, Dexpanthenol, Allantoin, Bisabolol, Tocopherylacetat, Octyldodecanol, Dodecanol, Tetradecanol, Hexadecanol, Octadecanol, Lanolinalkohol, Cetearylalkohol bzw. Cetylstearylalkohol, Cylomethicon, Dimethicon, Isopropyl-Myristat, Isopropyl-Palmitat, Cetearylethylhexanoat, Octylstearat, Octyloctanoat, Ethylhexansäureethylester, Jojoba-Öl, Sanddorn-Öl, Wollwachs bzw. Lanolin, Paraffin-Öl, Vaseline, Heptamethylnonan bzw. Isohexadecan, Cholesterol, Partialglyceride, Triglyceride, alkoxylierte Glyceride.

Als besonders vorteilhaft als zusätzliche Hautpflegekomponenten haben sich dabei alkoxylierte Monoglyceride und/oder alkoxylierte Diglyceride erwiesen.

Bei den Vitaminen sind insbesondere Vitamin A (Retinol), Vitamin B2 (Riboflavin), Vitamin B7 (Biotin) und/oder Vitamin B9 (Folsäure) geeignet. Derartige Vitamine sind gut für Haut und Nägel, fördern die Hauterneuerung und/oder schützten vor Hautentzündungen.

Prinzipiell kann jedoch auf zusätzliche Hautpflegekomponente verzichtet werden. Dies kann z. B. aus ökonomischen Gründen vorteilhaft sein.

Besonders bevorzugt ist als Hautpflegekomponente Glycerin, insbesondere mit einem Anteil von 0.2 - 1.5 Gew.-%, enthalten. Glycerin, welches auch als Glyzerin oder Glycerol bezeichnet wird, hat sich als besonders geeignete zusätzliche Hautpflegekomponente erwiesen, da keine wesentlichen Kompatibilitätsprobleme mit den übrigen Komponenten der Desinfektionsmittel festgestellt werden konnten. Desinfektionsmittel mit Glycerin haben zudem eine hautbefeuchtende Wirkung und erhöhen die Geschmeidigkeit der Haut.

Anteile von 0.2 - 1.5 Gew.-% an Glycerin sind dabei besonders vorteilhaft. Bei geringeren Anteilen als 0.2 Gew.-% nimmt die Wirkung des Glycerins rasch ab, während höhere Anteile als 1.5 Gew.-% kaum einen Zusatznutzen bringen und daher unökonomisch sind.

Mit Vorteil ist des Weiteren ein Hilfsstoff zur Regulierung der stofflichen Konsistenz enthalten. Der Begriff stoffliche Konsistenz bezieht sich in diesem Zusammenhang insbesondere auf den stofflichen Zusammenhalt, die Anhaftung, die Klebrigkeit, die Plastizität und/oder die Viskosität des Desinfektionsmittels. Die stoffliche Konsistenz kann z. B. durch an sich bekannte mechanische Tests und/oder durch haptische Tests, also über den Gefühlssinn, bestimmt werden. Insbesondere bei der Verwendung des Desinfektionsmittels zur Händedesinfektion hat die stoffliche Konsistenz einen entscheidenden Einfluss auf das Hautgefühl, was vor allem beim häufigen und regelmässigen Gebrauch bedeutsam sein kann.

Je nach Verwendungszweck können unterschiedliche stofflichen Konsistenzen von Vorteil sein. Bei der Verwendung des Desinfektionsmittels zur Händedesinfektion sind z. B. sehr dünnflüssige und kaum anhaftende Desinfektionsmittel durch den Benutzer schwieriger handhabbar, da die Gefahr des unkontrollierten Abtropfens besteht. Sehr dickflüssige und stark anhaftende Desinfektionsmittel sind diesbezüglich weniger problematisch, erfordern dagegen aber ein sehr starkes Reiben, um eine gleichmässige Verteilung des Desinfektionsmittels auf allen Handbereichen zu erzielen, was ebenfalls nicht optimal ist.

Eine Regulierung der stofflichen Konsistenz des Desinfektionsmittels ist daher in den meisten Fällen vorteilhaft. Grundsätzlich ist es aber möglich, auf Hilfsstoffe zur Regulierung der stofflichen Konsistenz zu verzichten.

Als Hilfsstoff zur Regulierung der stofflichen Konsistenz sind insbesondere Wachse und/oder Polymere geeignet. Derartige Verbindungen können bezüglich ihrer chemischen Struktur (Kettenlänge, chemische Zusammensetzung, funktionelle Gruppen) gezielt modifiziert werden und erlauben daher eine gezielte Regulierung der stofflichen Konsistenz des Desinfektionsmittels. Mögliche Vertreter sind z. B. Polyethylenglykol und/oder Hydroxyethylcellulose. Der Anteil an Hilfsstoffen zur Regulierung der stofflichen Konsistenz ist von der Beschaffenheit des Hilfsstoffs selbst abhängig und muss entsprechend der gewünschten stofflichen Konsistenz des Desinfektionsmittels angepasst werden.

Vorteilhafterweise liegt als Hilfsstoff zur Regulierung der stofflichen Konsistenz ein Polyethylenglykol mit einer mittleren relativen Molekülmasse von 2500 - 5000, insbesondere 3500 - 4500, vor. Gemäss allgemein gebräuchlicher Nomenklatur werden Polyethylenglykole häufig durch den Ausdruck PEG zusammen mit einer Zahlenangabe, welche im Wesentlichen der mittleren relativen Molekülmasse entspricht, bezeichnet. Als ideal hat sich in diesem Zusammenhang PEG 4000, also Polyethylenglykol mit einer mittleren relativen Molekülmasse von ca. 4000, erweisen. PEG 4000 lässt sich dabei relativ gut dosieren und beeinträchtigt die viruzide Wirkung des Desinfektionsmittels kaum.

Prinzipiell können aber auch Polyethylenglykole mit relativen Molekülmassen von weniger als 2500 oder mehr als 5000 eingesetzt werden.

Mit Vorteil weist das Polyethylenglykol einen Anteil von 0.1 - 5 Gew.-%, besonders bevorzugt 0.5 - 1.5 Gew.-%, auf. Derartige Anteile verbessern die stoffliche Konsistenz des Desinfektionsmittels insbesondere im Hinblick auf die Händedesinfektion. Im Besonderen die Klebrigkeit und die Anhaftung des Desinfektionsmittels liegen dabei in einem vorteilhaften Bereich.

Prinzipiell können auch weniger als 0.1 Gew.-% oder mehr als 5 Gew.-% an Polyethylenglykol zugegeben werden, falls dies im Hinblick auf die stoffliche Konsistenz des Desinfektionsmittels vorteilhaft und/oder erforderlich sein sollte.

Zur Regulierung der Viskosität kann es vorteilhaft sein, im Desinfektionsmittel zusätzlich ein Verdickungsmittel vorzusehen. Geeignet hierfür sind z. B. Verdickungsmittel auf der Basis von kreuzvernetzten Polyacrylaten. Ein geeignetes Verdickungsmittel ist beispielsweise unter dem Handelsnamen Carbopol ETD 2020 erhältlich.

Weiter kann im Desinfektionsmittel wenigstens eine zusätzliche biozide Komponente vorliegen. Biozide Komponenten sind Wirkstoffe, die dazu bestimmt sind, auf chemischem oder biologischem Wege Schadorganismen zu zerstören, abzuschrecken, unschädlich zu machen und/oder Schädigungen durch sie zu verhindern. Durch die Zugabe von zusätzlichen bioziden Komponenten kann die Wirksamkeit des Desinfektionsmittels weiter verbreitert werden. Geeignet als biozide Komponente in diesem Zusammenhang sind insbesondere eine oder mehrere Substanzen, welche in der europäischen Biozid-Richtlinie 98/8/EG für Anwendungen bei der menschlichen Hygiene genannt sind:

Formaldehyd; Bronopol; Chlorkresol; Peressigsäure; Chlorxylenol; Biphenyl-2-ol; Hexa-2,4-diensäure/Skorbutsäure; Glutaral; Clorofen; 2-Phenoxyethanol; Cetylpyridiniumchlorid; Tosylchloramidnatrium; Natrium-2-biphenylat; Phthalaldehyd; N-(3-Aminopropyl)-N-dodecylpropan-1,3-diamin; Troclosennatrium; Natriumdichlorisocyanurat-Dihydrat; Didecyldimethylammoniumchlorid; Iod; Natriumhypochlorit; Wasserstoffperoxid; Calciumhypochlorit; Silberchlorid; Lignin; 2,2-Dibrom-2-cyanacetamid; Natrium-p-chlor-m-kresolat; D-Gluconsäure-Verbindung mit N,N"-Bis(4-chlorphenyl)-3,12-diimino-2,4,11,13-tetraazatetradecandiamidin (2:1); Kalium-(E,E)-hexa-2,4-dienoat; Quaternäre Ammoniumverbindungen, Benzyl-C12-18-alkyldimethyl-, Chloride; Quaternäre Ammoniumverbindungen, Benzyl-C 12-16-alkyldimethyl-, Chloride; Quaternäre Ammoniumverbindungen, Di-C8-10-alkyldimethyl-,Chloride; Pentakalium-bis(peroxymonosulfat)-bis(sulfat); Quaternäre Ammoniumverbindungen, Benzyl-C12-14-alkyldimethyl-,Chloride; Quaternäre Ammoniumverbindungen, C12-14-Alkyl[(ethylphenyl)methyl]dimethyl-, Chloride; Quaternäre Ammoniumverbindungen, [2-[[2-[(2-Carboxyethyl)(2-hydroxyethyl)-amino]ethyl]amino]-2-oxoethyl]-kokosalkyldimethyl-, Hydroxide, Innere Salze; Reaktionsprodukte aus: Glutaminsäure und N-(C12-14-alkyl)-propylendiamin; 6-(Phthalimid)peroxyhexansäure; Silbernatriumhydrogenzirconiumphosphat; Poly(hexamethylendiaminguanidiniumchlorid); Polyhexamethylenbiguanid; Oligo(2-(2-ethoxy)ethoxyethylguanidiniumchlorid)Polymer; Amine,n-C10-16-alkyltrimethylenedi-, Reaktionsprodukte aus Chloressigsäure; Quaternäre Ammoniumiodide; Quaternäre Ammoniumverbindungen(Benzylalkyldimethyl(Alkyl aus C8-C22, gesättigt und ungesättigt, und Talgalkyl, Kokosalkyl und Soyaalkyl), Chloride, Bromide oder Hydroxide)/BKC; Quaternäre Ammoniumverbindungen(Dialkyldimethyl(Alkylaus C6-C18, gesättigt und ungesättigt, und Talgalkyl, Kokosalkylund Soyaalkyl), Chloride, Bromide oder Methylsulphate)/DDAC; 2-Butanon, Peroxid; Borsäure; Dinatriumoctaborat-Tetrahydrat; Triclosan; Melaleuca alternifolia, Extrakt/Australisches Teebaumöl; Schwefeldioxid; Natriumhydrogensulfit; Dinatriumdisulfit; Natriumsulfit; Kaliumsulfit; Dikaliumdisulfit; 1-[[2-(2,4-Dichlorphenyl)-4-propyl-1,3-dioxolan-2-yl]methyl]-1H-1,2,4-triazol/Propiconazol; Triclocarban; Dodecylguanidin-Monohydrochlorid; Silber-Zink-Aluminium-Borphosphatglas/Glasoxid, silber-und zinkhaltig; Aluminiumnatriumsilikat-Silberzinkkomplex/Silber-Zink-ZeolithPflanzenschutzmittel; Natriumbenzoat; Dinatriumtetraborat, wasserfrei; Gemisch auscis-und trans-p-Menthan-3,8 diol/Citriodiol; Mecetroniumetilsulfat; Amine, C10-16-Alkyldimethyl-,N-Oxide; Calciumdihexa-2,4-dienoat; Natriumhydrogencarbonat; Benzoxoniumchlorid; Benzethoniumchlorid; Tetradoniumbromid; Polyvinylpyrrolidon-Iod; Silbernitrat; N,N'-(Decan-1,10-diyldi-1(4H)-pyridyl-4-yliden)bis(octylammonium)dichlorid; 2,4,8,10-Tetra(tert-butyl)-6-hydroxy-12H-dibenzo[d,g][1,3,2]dioxaphosphocin-6-oxid, Natriumsalz.

Die Zugabe einer zusätzlichen bioziden Komponente ist jedoch fakultativ.

Zusätzlich kann wenigstens ein Additiv aus der Gruppe umfassend Denaturierungsmittel, farbgebende Mittel, Geruchskorrigenzien, pH-Regulatoren und/oder Lösungsvermittler vorliegen. Durch derartige Additive kann das Desinfektionsmittel weiter an die spezifischen Erfordernisse angepasst werden.

Als Denaturierungsmittel bzw. Vergällungsmittel kann z. B. Butan-2-on eingesetzt werden. Damit wird sichergestellt, dass das Desinfektionsmittel ungeniessbar ist und nicht als alkoholisches Getränk verwendbar ist.

Geeignete Lösungsvermittler, welche die Löslichkeit anderer Substanzen im Desinfektionsmittel verbessern, sind z. B. hydrogeniertes Rizinusöl und/oder Fettalkoholalkoxylate.

Vorteilhafterweise enthält das Desinfektionsmittel wenigstens ein pH-Regulator, um den pH-Wert des Desinfektionsmittels einzustellen. Als pH-Regulatoren sind im Besonderen Aminomethylpropanol (2-amino-2-methyl-propan-1-ol), Monoethanolamin (2-aminoethanol) und/oder Triethanolamin (2-(bis(2-hydroxyethyl)amino)ethanol) geeignet. Als besonders vorteilhaft hat sich dabei Monoetanolamin erwiesen.

Mit Vorteil wird das viruzide Desinfektionsmittel, beispielsweise durch Zugabe von pH-Regulatoren, auf einen pH-Wert von wenigstens 3.5, bevorzugt wenigstens 4.0 eingestellt. Dies ist insbesondere bei der Verwendung als Händedesinfektionsmittel von Vorteil, da dadurch die Haut nicht zu stark sauren Bedingungen ausgesetzt wird.

Prinzipiell ist es aber auch möglich, einen geringeren pH-Wert als 3.5 vorzusehen. Dies kann jedoch bei der regelmässigen und intensiven Verwendung des Desinfektionsmittels nachteilig sein.

Das viruzide Desinfektionsmittel kann grundsätzlich in einem Behälter, wie beispielsweise einem Beutel, einer Dose und/oder einer Tube vorliegen. Daraus kann z. B. eine manuelle Entnahme durch den Benutzer erfolgen.

Vorteilhafterweise liegt das viruzide Desinfektionsmittel jedoch in einer speziell ausgebildeten Ausgabevorrichtung, insbesondere einem automatischen Dispenser und/oder einem Sprühapplikator, vor. Dadurch kann das viruzide Desinfektionsmittel in definierter Art und Weise auf die zu desinfizierenden Oberflächen gelangen. Mit Vorteil liegt das viruzide Desinfekltionsmittel in einem automatischen Dispenser vor, welcher dem Benutzer zusätzlich Informationen zum genauen Ablauf des Desinfektionsvorgangs liefert. Ein geeigneter automatischer Dispenser für die Händedesinfektion ist z. B. in der europäischen Patentanmeldung EP 07 405 271.3 (OroClean Chemie AG) beschrieben.

Abgesehen von Sprühapplikatoren oder Dispensern haben sich auch solche Erzeugnisse als vorteilhaft herausgestellt, bei denen das viruzide Desinfektionsmittel auf einem festen Träger vorliegt, welcher mit dem Desinfektionsmittel getränkt oder imprägniert ist. Besonders geeignet sind imprägnierte und/oder getränkte textile Flächengebilde, wie z. B. Tücher, Lappen oder Verbandmaterial. Auch lose Gefüge von Fasern oder Fäden bzw. Watten können mit den viruziden Desinfektionsmitteln imprägniert und/oder getränkt sein und beispielsweise als medizinische Tupfer eingesetzt werden. Auch denkbar ist die Verwendung von imprägnierten und/oder getränkten Papieren. Auch feste Träger, welche mit Desinfektionsmittel getränkt oder imprägniert sind, können in speziellen, insbesondere automatischen gesteuerten, Ausgabevorrichtung vorliegen

Die erfindungsgemässen Desinfektionsmittel weisen insgesamt ein sehr breites Anwendungsspektrum auf und können zur Desinfektion einer Vielzahl von unterschiedlichen unbelebten Oberflächen als auch von verschiedensten belebten Oberflächen eingesetzt werden. Die unbelebten Oberflächen können beispielsweise in Form von medizintechnischen Geräten vorliegen. Bei den belebten Oberflächen handelt es sich insbesondere um menschliche und/oder tierische Hautbereiche, wobei zu den menschlichen Hautbereichen im Besonderen die Haut der Hände zählt.

Zur Herstellung der erfindungsgemässen viruziden Desinfektionsmittel kann beispielsweise folgendermassen vorgegangen werden: In einem ersten Verfahrensschritt werden alle Komponenten bis auf die alkoholische Hauptkomponente in einer geeigneten Menge Wasser vollständig aufgelöst. Hierbei können, falls erforderlich, auch Lösungsvermittler, wie sie vorstehend beschrieben sind, eingesetzt werden. In einem zweiten Verfahrensschritt wird anschliessend eine alkoholische Hauptkomponente zur wässrigen Lösung zugegeben.

Grundsätzlich sind aber auch andere Herstellungsverfahren denkbar. So können beispielsweise in Alkohol ausreichend lösliche Komponenten des Desinfektionsmittels vorab in der alkoholischen Hauptkomponente gelöst werden und erst im zweiten Schritt mit der wässrigen Lösung vermischt werden. Prinzipiell ist es zudem auch denkbar, alle Komponenten in einem Verfahrenschritt gemeinsam zu vermischen.

Aus der nachfolgenden Detailbeschreibung und der Gesamtheit der Patentansprüche ergeben sich weitere vorteilhafte Ausführungsformen und Merkmalskombinationen der Erfindung.

### Wege zur Ausführung der Erfindung

Um das Wesen der Erfindung zu demonstrieren, wurden verschiedene Rezepturen von Desinfektionsmitteln mit unterschiedlichen Zusammensetzungen angesetzt und auf ihre viruzide Wirksamkeit hin getestet. Zur Herstellung der Desinfektionsmittel wurden in einem ersten Verfahrensschritt alle Komponenten bis auf die alkoholische Hauptkomponente in einer vorgegeben Menge Wasser vollständig aufgelöst und in einem zweiten Verfahrenschritt die entsprechende Menge an alkoholischer Hauptkomponente zugegeben.

Die viruzide Wirksamkeit der so hergestellten Desinfektionsmittel wurde mit Polioviren Typ 1, LSc - 2ab als Prüfvirus gemäss den Prüfbedingungen "Hygienische Händewaschdesinfektion und Händewaschung" der Norm EN 14476 (aus dem Jahre 2005) durchgeführt. Insbesondere wurde das Prüfvirus bzw. Polioviren Typ 1, LSc - 2ab in einer der Norm gemässen Virensuspension bei 20 ± 1°C vorgelegt. Ebenso wurde als Belastungssubstanz wie vorgeschrieben PBS bzw. gepufferte Kochsalzlösung bei 20 ± 1°C verwendet. Weiter wurden 1 ml (Milliliter) der Virensuspension und 1 ml der gepufferten Kochsalzlösung mit 8 ml des auf 20 ± 1°C vorgewärmten viruziden Desinfektionsmittels vermischt und bei einer Prüftemperatur von 20 ± 1°C gehalten. Nach einer Einwirkzeit von 60 Sekunden, 90 Sekunden und 120 Sekunden wurden Teilvolumen entnommen und zur Unterdrückung der viruziden Wirkung sofort in ein Zellerhaltungsmedium überführt. Entsprechend der Norm EN 14476 (aus dem Jahre 2005) wurde anschliessend der Virustiter bestimmt. Die Reduktion der Infektiosität der Viren wird der Norm entsprechend aus den Differenzen der dekadischen logarithmischen Virustiter vor und nach der Behandlung mit dem viruziden Desinfektionsmittel berechnet.

### Beispiele A und B: Viruzide Desinfektionsmittel mit einer sauren Verbindung und Harnstoff (ohne Zinksalz)

Die in Tabelle 1 aufgeführten viruziden Desinfektionsmittel gemäss den Beispielen A und B weisen eine alkoholische Hauptkomponente, bestehend aus Ethanol und 2-Propanol, mit einem Gewichtsanteil von insgesamt 73.07 Gew.-% auf. Als saure Verbindung bzw. Säure ist in beiden Beispielen A und B L(+)-Milchsäure mit geringfügig unterschiedlichen Anteilen von 2.50 Gew.-% (Beispiel A) bzw. 2.00 Gew.-% (Beispiel B) enthalten. Des Weiteren liegt bei beiden Beispielen Harnstoff, ebenfalls mit geringfügig unterschiedlichen Anteilen von 2.50 Gew.-% (Beispiel A) bzw. 3.00 Gew.-% (Beispiel B) vor. Zudem weisen die Rezepturen der Beispiele A und B PEG 4000 als Hilfsstoff zur Regulierung der stofflichen Konsistenz, Glycerin als Hautpflegekomponente, Natrium-Pyrrolidoncarboxylat (Na-PCA) und Wasser auf.

Wie Tabelle 1 zu entnehmen ist, wird bei Rezepturen gemäss den Beispielen A und B bereits nach 60 Sekunden eine Virustiterreduktion um 3.88 Log-Stufen (Beispiel A) bzw. 3.50 Log-Stufen (Beispiel B) erreicht. Nach 90 Sekunden zeigen beide Rezepturen bereits eine Virustiterreduktion von mehr als 4 Log-Stufen und nach 120 Sekunden wird mit der Rezeptur gemäss Beispiel A bereits eine Virustiterreduktion um mehr als 5 Log-Stufen erreicht. Somit liegt klar eine viruzide Wirkung vor.

Die viruziden Desinfektionsmittel gemäss den Beispielen A und B haben sich zudem während wenigstens zwei Wochen als lagerstabil und gut hautverträglich erwiesen. Juckreiz, Rötungen oder Hautbrennen konnte auch nach intensiver Anwendung nicht festgestellt werden.

Die viruziden Desinfektionsmittel gemäss den Beispielen A und B können daher als praxistauglich bezeichnet werden.

**Tabelle 1**

| | Beispiel → | A | B |
|---|---|---|---|
| Komponente ↓ | | | |
| Alkohol [Gew.-%] | | | |
| | Ethanol | 69.39 | 69.39 |
| | 2-Propanol | 3.68 | 3.68 |
| Säure [Gew.-%] | | | |
| | L(+)-Milchsäure | 2.50 | 2.00 |
| | Glycolsäure | - | - |
| Harnstoff [Gew.-%] | | 2.50 | 3.00 |
| Salze [Gew.-%] | | | |
| | Zink-PCA | - | - |
| | Natrium-PCA | 0.25 | 0.25 |
| Hautschutz [Gew.-%] | | | |
| | Glycerin | 1.00 | 1.00 |
| Hilfsstoffe [Gew.-%] | | | |
| | PEG 4000 | 1.00 | 1.00 |
| Rest [Gew.-%] | | | |
| | Wasser | 19.68 | 19.68 |
| Virustiterreduktion [Log-Stufen] | | | |
| | 60 Sekunden | 3.88 | 3.50 |
| | 90 Sekunden | ≥4.38 | 4.38 |
| | 120 Sekunden | ≥5.13 | ≥4.75 |

### Beispiele C - K: Viruzide Desinfektionsmittel mit einer sauren Verbindung und Harnstoff sowie einem organischen Zinksalz

Die in Tabelle 2 aufgeführten viruziden Desinfektionsmittel gemäss den Beispielen C - K weisen wie die Bespiele A - B allesamt eine alkoholische Hauptkomponente, bestehend aus einer Mischung aus Ethanol und 2- Propanol auf, sowie eine saure Verbindung, Harnstoff und Zn-PCA als organisches Zinksalz auf. Die saure Verbindung wird bei den Beispielen C, D und F - K ausschliesslich durch L(+)-Milchsäure gebildet. Bei Beispiel E besteht die saure Verbindung aus einer 2:1-Mischung aus L(+)-Milchsäure und Glykolsäure. Zudem weisen die Rezepturen der Beispiele C - K PEG 4000 als Hilfsstoff zur Regulierung der stofflichen Konsistenz, Glycerin als Hautpflegekomponente und Wasser auf.

Ein Vergleich der Beispiele C, D und F, welche bis auf die unterschiedlichen Anteile an Harnstoff im Wesentlichen eine identische Zusammensetzung aufweisen, zeigt, dass mit Vorteil der Gewichtsanteil der sauren Verbindung grösser gewählt wird als der Gewichtsanteil der Harnsäure. Beispiel C, welches 2 Gew.-% L(+)-Milchsäure und 0.50 Gew.-% Harnstoff aufweist, zeigt nämlich nach 60 Sekunden bereits eine Virustiterreduktion von 3.75 Log-Stufen. Ein derartiger Wert wird bei Beispiel F, welches mit 2.50 Gew.-% mehr Harnstoff bei gleichem Gewichtsanteil an L(+)-Milchsäure aufweist, nach 60 Sekunden nicht erreicht. Ein entsprechender Zusammenhang lässt sich auch bei einem Vergleich der Beispiele G - I erkennen.

Vergleicht man Beispiel D mit Beispiel E, so wird ersichtlich, dass eine 2:1 Mischung aus L(+)-Milchsäure und Glykolsäure als saure Verbindung bei gleichem Gesamtanteil an sauer Verbindung eine gesteigerte viruzide Wirkung erzielbar ist. Bei Beispiel E, welches als saure Verbindung eine entsprechende Mischung aus L(+)-Milchsäure und Glykolsäure aufweist, wird nach 60 Sekunden eine Virustiterreduktion von 3.88 Log-Stufen und nach 120 Sekunden bereits eine Virustiterreduktion von ≥4.88 Log-Stufen erreicht. Im Gegensatz dazu beträgt die Virustiterreduktion bei Beispiel D erst nach 120 Sekunden einen Wert von 4.00 Log-Stufen.

Die Beispiele D, J und K weisen bis auf den unterschiedlichen Gehalt an organischem Zinksalz bzw. Zn-PCA im Wesentlichen eine identische Zusammensetzung auf. Ein Vergleich der drei Beispiele zeigt, dass eine Erhöhung des Anteils an Zn-PCA von 0.45 Gew.-% (Beispiel D) auf 0.68 Gew.-% (Beispiel J) oder 0.90 Gew.-% (Beispiel K) eine deutliche Steigerung der viruziden Wirkung mit sich bringt. Bei den Beispielen J und K wird nämlich bereits nach 60 Sekunden eine Virustiterreduktion von wenigstens 4.25 LogStufen erreicht. Bei Beispiel F tritt eine derartige Virustiterreduktion auch nach 120 Sekunden nicht ein.

Ein besonderes Augenmerk ist auf die Beispiele G - K zu richten. Bei diesen Rezepturen, treten Virustiterreduktionen von wenigstens 4.00 Log-Stufen durchwegs bereits nach 60 Sekunden ein, wie dies beispielsweise in der Norm EN 14476 (aus dem Jahre 2005) gefordert wird. Nach 120 Sekunden werden bei den Beispielen C- K sogar durchwegs Virustiterreduktionen von wenigstens 5.00 Log-Stufen erzielt. Die besonders vorteilhaften Rezepturen der Beispiele G - K weisen ca. 73 Gew.-% an Ethanol und 2-Propanol in Kombination mit 2.00 - 2.50 Gew.-% L(+)-Milchsäure, 2.00 - 3.00 Gew.-% Harnstoff, 0.45 - 0.90 Gew.-% organischem Zinksalz bzw. Zn-PCA, 0.50 - 1.00 Gew.-% Hautschutzmittel bzw. Glyzerin und ca. 1.00 Gew.-% Hilfsstoffe Regulierung der stofflichen Konsistenz bzw. PEG 4000 sowie ca. 20.0 - 20.3 Gew.-% Wasser auf.

Des Weiteren haben sich die viruziden Desinfektionsmittel gemäss den Beispielen C - K während wenigstens 2 Wochen als lagerstabil und gut hautverträglich erwiesen. Juckreiz, Rötungen oder Hautbrennen konnte auch nach intensiver Anwendung nicht festgestellt werden.

Die viruziden Desinfektionsmittel gemäss den Beispielen C - K können daher ebenfalls als praxistauglich bezeichnet werden, wobei die Beispiele G - K zudem die in der Norm EN 14476 (aus dem Jahre 2005) geforderten Virustiterreduktionen bei einer Einwirkzeit von 60 Sekunden bzw. 1 Minute erfüllen.

**Tabelle 2**

| | Bespiel → | C | D | E | F | G | H | I | J | K |
|---|---|---|---|---|---|---|---|---|---|---|
| Komponente ↓ | | | | | | | | | | |
| Alkohol [Gew.-%] | | | | | | | | | | |
| | Ethanol | 70.79 | 69.32 | 69.32 | 69.32 | 69.32 | 69.32 | 69.32 | 69.39 | 69.39 |
| | 2-Propanol | 3.76 | 3.69 | 3.69 | 3.69 | 3.69 | 3.69 | 3.69 | 3.68 | 3.68 |
| Säure [Gew.-%] | | | | | | | | | | |
| | L(+) Milchsäure | 2.00 | 2.00 | 1.34 | 2.00 | 2.50 | 2.50 | 2.50 | 2.00 | 2.00 |
| | Glykolsäure | - | - | 0.66 | - | - | - | - | - | - |
| Harnstoff [Gew.-%] | | 0.50 | 2.00 | 2.00 | 2.50 | 2.00 | 2.50 | 3.00 | 2.00 | 2.00 |
| Salze [Gew.-%] | | | | | | | | | | |
| | Zink-PCA | 0.45 | 0.45 | 0.45 | 0.45 | 0.45 | 0.45 | 0.45 | 0.68 | 0.90 |
| | Natrium-PCA | - | - | - | - | - | - | - | - | - |
| Hautschutz [Gew.-%] | | | | | | | | | | |
| | Glycerin | 1.00 | 1.00 | 1.00 | 0.50 | 0.50 | 0.50 | 0.50 | 1.00 | 1.00 |
| Hilfsstoffe [Gew.-%] | | | | | | | | | | |
| | | 1.00 | 1.00 | 1.00 | 1.00 | 1.00 | 1.00 | 1.00 | 1.00 | 1.00 |
| | PEG 4000 | | | | | | | | | |
| Rest [Gew.-%] | | | | | | | | | | |
| | Wasser | 20.50 | 20.54 | 20.54 | 20.54 | 20.04 | 20.04 | 20.04 | 20.25 | 20.03 |
| Virustiterreduktion [Log-Stufen] | | | | | | | | | | |
| | 60 Sekunden | 3.75 | 2.75 | 3.88 | 3.38 | 4.25 | 4.25 | 4.00 | 4.38 | 4.25 |
| | 90 Sekunden | ≥4.38 | 3.38 | ≥4.88 | 4.38 | ≥4.63 | ≥5.25 | ≥4.50 | ≥5.38 | 5.25 |
| | 120 Sekunden | ≥5.38 | 4.00 | ≥4.88 | 4.38 | ≥5.25 | ≥5.00 | ≥5.50 | ≥5.13 | ≥5.25 |

### Beispiele L - N: Vergleichsbeispiele

Tabelle 3 enthält nicht erfindungsgemässe Beispiele L - N zu Vergleichszwecken. Die Rezeptur gemäss Beispiel L enthält zwar nebst 72.22 Gew.-% Ethanol und 3.79 Gew.-% 2-Propanol als alkoholische Hauptkomponente auch saure Verbindungen in form von 1.34 Gew.-% an L(+)-Milchsäure und 0.66 Gew.-% Glykolsäure. Zudem sind PEG 4000 als Hilfsstoff zur Regulierung der stofflichen Konsistenz, Glycerin als Hautpflegekomponente, Natrium-Pyrrolidoncarboxylat (Na-PCA) und Wasser enthalten. Beispiel L enthält jedoch weder Harnstoff noch ein Zinksalz.

Beispiel M enthält nebst 72.22 Gew.-% Ethanol und 3.79 Gew.-% 2-Propanol als alkoholische Hauptkomponente 4.00 Gew.-% Harnstoff sowie PEG 4000 als Hilfsstoff zur Regulierung der stofflichen Konsistenz und Wasser auf. Beispiel M enthält jedoch im Wesentlichen keine saure Verbindung und kein Zinksalz.

Beispiel N weist im Wesentlichen die gleiche Zusammensetzung auf wie Beispiel M wobei anstelle des Harnstoffs bei Beispiel N 1.10 Gew.-% organisches Zinksalz bzw. Zn-PCA vorliegen. Die Rezeptur gemäss Beispiel N enthält weder eine saure Verbindung noch Harnstoff.

Die maximale Virustiterreduktion nach 120 Sekunden, welche mit den Rezepturen der Beispiele L - N erreichbar ist, liegt bei 3.69 Log-Stufen. Auch bei einer langen Einwirkzeit von 120 Sekunden erreicht daher keines der Vergleichsbeispiel L - N eine Virustiterreduktion um 4 Log-Stufen. Obschon die Rezepturen gemäss den Beispielen L - N gut hautverträglich sind, müssen sie aufgrund der beschränkten viruziden Wirkung als kaum praxistauglich eingestuft werden.

**Tabelle 3**

| | Beispiel → | L | M | N |
|---|---|---|---|---|
| Komponente ↓ | | | | |
| Alkohol [Gew.-%] | | | | |
| | Ethanol | 71.22 | 71.21 | 71.21 |
| | 2-Propanol | 3.79 | 3.79 | 3.79 |
| Säure [Gew.-%] | | | | |
| | L(+) Milchsäure | 1.34 | 0.03 | - |
| | Glykolsäure | 0.66 | - | - |
| Harnstoff [Gew.-%] | | - | 4.00 | - |
| Salze [Gew.-%] | | | | |
| | Zink-PCA | - | - | 1.10 |
| | Natrium-PCA | 0.45 | - | - |
| Hautschutz [Gew.-%] | | | | |
| | Glycerin | 1.00 | - | - |
| Hilfsstoffe [Gew.-%] | | | | |
| | PEG 4000 | 1.00 | 1.00 | 1.00 |
| Rest [Gew.-%] | | | | |
| | Wasser | 20.54 | 19.97 | 22.90 |
| Virustiter Reduktionsfaktor [Log-Stufen] | | | | |
| | 60 Sekunden | 1.69 | 1.75 | 3.06 |
| | 90 Sekunden | 3.06 | 2.50 | 3.69 |
| | 120 Sekunden | 3.19 | 3.13 | 3.69 |

### Beispiele O - R: Löslichkeitsversuche

Die Beispiele O - R (Tabelle 4) belegen, dass Harnstoff als Lösungsvermittler für organische Zinksalze in Alkoholen wirken kann. Beispiel O besteht aus einer Mischung aus 73 Gew.-% Alkoholen (Ethanol und 2-Propanol), 2.00 Gew.-% L(+)-Milchsäure, 0.25 Gew.-% organisches Zinksalz bzw. Zink-PCA sowie als Rest Wasser. Beispiel P weist 1.34 Gew.-% L(+)-Milchsäure und 0.66 Gew.-% Glycolsäure und 0.45 Gew.-% organisches Zinksalz bzw. Zink-PCA auf. Jedoch enthalten die beiden Beispiele O und P keinen Harnstoff. Wie in Tabelle 4 angegeben bildet sich 48 - 72 Stunden nach dem Ansetzen der Rezepturen bei den Beispielen O und P Ausfällungen des organischen Zinksalzes.

Die Beispiele Q und R enthalten nebst 73 Gew.-% an Alkoholen 0.45 Gew.-% (Beispiel Q) bzw. 0.90 Gew.-% (Beispiel R) an organischem Zinksalz (Zink-PCA) und Wasser zusätzlich 2.00 Gew.-% Harnstoff. Bei den Rezepturen gemäss diesen Beispielen konnten auch nach mehr als zwei Wochen keinerlei Veränderungen oder Ausfällungen beobachtet werden. Die im Allgemeinen eher geringe Löslichkeit von organischen Zinksalzen in Lösungen mit hohem Alkoholgehalt kann somit im Zusammenspiel mit Harnstoff erheblich gesteigert werden, was wiederum eine erhöhte Lagerstabilität mit sich bringt.

**Tabelle 4**

| | Beispiel → | O | P | Q | R |
|---|---|---|---|---|---|
| Komponente ↓ | | | | | |
| Alkohol [Gew.-%] | | 73 | 73 | 73 | 73 |
| Säure [Gew.-%] | | | | | |
| | L(+) Milchsäure | 2.00 | 1.34 | 2.00 | 2.00 |
| | Glykolsäure | - | 0.66 | - | - |
| Harnstoff [Gew.-%] | | - | - | 2.00 | 2.00 |
| Zink-PCA [Gew.-%] | | 0.25 | 0.45 | 0.45 | 0.90 |
| Rest [Gew.-%] | | | | | |
| | Wasser | 24.75 | 24.55 | 22.55 | 22.10 |
| Stabilität bei Raumtemperatur | | Ausfällung nach 48 - 72 h | Ausfällung nach 48 - 72 h | > 2 Wochen stabil | > 2 Wochen stabil |

Die vorstehend genannten Ausführungsbeispiele sind lediglich als illustrative Beispiele zu verstehen, welche beliebig abgewandelt werden können.

So ist es zum Beispiel möglich, anstelle oder in Kombination mit Harnstoff und/oder Zinksalzen weitere Komponenten, wie z. B. denaturierend wirkende Substanzen und/oder chaotrope Substanzen (Substanzen, welche Wasserstoffbrücken aufbrechen), einzusetzen. Hierfür können insbesondere Guanidinhydrochlorid und/oder organische Aluminiumsalze und/oder organische Silbersalze geeignet sein.

Ebenso kann es vorteilhaft sein, Harnstoff in Kombination mit andersartigen Desinfektionsmittelformulierungen als Lösungsvermittler für Salze und/oder zur Verstärkung der viruziden Wirkung einzusetzen.

Zusammenfassend ist festzustellen, dass neuartige Rezepturen für viruzide Desinfektionsmittel gefunden wurden, welche sich durch eine hohe viruzide Wirkung und äusserst gute Hautverträglichkeit auszeichnen. Zudem zeichnen sich die erfindungsgemässen Desinfektionsmittel durch eine hohe Lagerstabilität und Haltbarkeit aus.

## Patentansprüche

1. Viruzides Desinfektionsmittel auf alkoholisch-wässriger Basis, für epikutane Anwendung zur hygienischen und/oder chirurgischen Händedesinfektion, wobei eine alkoholische Hauptkomponente einen Anteil von mindestens 50 Gew.-% und weniger als 80 Gew.-% aufweist und wenigstens eine saure Verbindung vorliegt, welche anorganisch oder organisch sein kann, wobei die organische saure Verbindung durch mindestens eine Carboxygruppe (-COOH) charakterisiert ist, **dadurch gekennzeichnet, dass** Harnstoff und PEG mit einer Mittleren relativen Molekülmasse von 2500-5000 als Hilfsstoff zur Regulierung der stofflichen Konsistenz enthalten sind.

2. Viruzides Desinfektionsmittel nach Anspruch 1, **dadurch gekennzeichnet, dass** der Harnstoff einen Anteil von 0.2 - 8 Gew.-%, insbesondere 1.75 - 3.25 Gew.-%, aufweist.

3. Viruzides Desinfektionsmittel nach einem der Ansprüche 1 - 2, **dadurch gekennzeichnet, dass** zusätzlich wenigstens ein Zinksalz enthalten ist.

4. Viruzides Desinfektionsmittel nach Anspruch 3, **dadurch gekennzeichnet, dass** das wenigstens eine Zinksalz ein organisches Zinksalz, insbesondere Zink-Pyrrolidoncarboxylat, umfasst.

5. Viruzides Desinfektionsmittel nach einem der Ansprüche 3-4, **dadurch gekennzeichnet, dass** ein Anteil des wenigstens einen Zinksalzes 0.2 - 2 Gew.-% beträgt.

6. Viruzides Desinfektionsmittel nach einem der Ansprüche 1 - 5, **dadurch gekennzeichnet, dass** die alkoholische Hauptkomponente aus einwertigen Alkoholen mit wenigstens 2 und höchstens 4 Kohlenstoffatomen besteht, wobei es sich bevorzugt um Ethanol und/oder 1-Propanol und/oder 2-Propanol handelt.

7. Viruzides Desinfektionsmittel nach einem der Ansprüche 1-6, **dadurch gekennzeichnet, dass** die wenigstens eine saure Verbindung eine organische Säure umfasst, wobei ein Anteil der organischen Säure bevorzugt 0.2 - 3 Gew.-% beträgt.

8. Viruzides Desinfektionsmittel nach Anspruch 7, **dadurch gekennzeichnet, dass** die wenigstens eine organische Säure Milchsäure und/oder Glykolsäure beinhaltet.

9. Viruzides Desinfektionsmittel nach einem der Ansprüche 1 - 8, **dadurch gekennzeichnet, dass** wenigstens eine zusätzliche Hautpflegekomponente enthalten ist, wobei als zusätzliche Hautpflegekomponente insbesondere Hautbefeuchtungsmittel, Mittel zur Erhöhung der Geschmeidigkeit der Haut und/oder Vitamine vorliegen.

10. Viruzides Desinfektionsmittel nach Anspruch 9, **dadurch gekennzeichnet, dass** als zusätzliche Hautpflegekomponente Glycerin, insbesondere mit einem Anteil von 0.2 - 1.5 Gew.-%, enthalten ist.

11. Viruzides Desinfektionsmittel nach einem der Ansprüche 9 - 10, **dadurch gekennzeichnet, dass** als zusätzliche Hautpflegekomponente alkoxylierte Glyceride, insbesondere mit einem Anteil von 0.2 - 1.5 Gew.-%, enthalten sind.

12. Viruzides Desinfektionsmittel nach einem der Ansprüche 1- 11, **dadurch gekennzeichnet, dass** wenigstens ein Hilfsstoff zur Regulierung der stofflichen Konsistenz enthalten ist, wobei als Hilfsstoff insbesondere ein Wachs und/oder ein Polymer vorliegt.

13. Viruzides Desinfektionsmittel nach einem der Ansprüche 1-12, **dadurch gekennzeichnet, dass** Polyethylenglykol einen Anteil von 0.1 - 5 Gew.-%, besonders bevorzugt 0.5 - 1.5 Gew.-%, aufweist.

14. Viruzides Desinfektionsmittel nach einem der Ansprüche 1- 13, **dadurch gekennzeichnet, dass** wenigstens eine zusätzliche biozide Komponente vorliegt.

15. Viruzides Desinfektionsmittel nach einem der Ansprüche 1- 14, **dadurch gekennzeichnet, dass** wenigstens ein Additiv aus der Gruppe umfassend Denaturierungsmittel, farbgebende Mittel, Geruchskorrigenzien, pH-Regulatoren und/oder Lösungsvermittler vorliegt.

16. Viruzides Desinfektionsmittel nach Anspruch 15, **dadurch gekennzeichnet, dass** Monoethanolamin als pH-Regulator enthalten ist.

17. Viruzides Desinfektionsmittel nach einem der Ansprüche 1 - 16, **dadurch gekennzeichnet, dass** das viruzide Desinfektionsmittels einen pH-Wert von wenigstens 3.5, bevorzugt wenigstens 4.0 aufweist.

18. Ausgabevorrichtung, insbesondere ein Dispenser oder ein Sprühapplikator, enthaltend ein viruzides Desinfektionsmittel nach einem der Ansprüche 1 - 17.

## Claims

1. An aqueous/alcohol-based virucidal disinfecting agent, particularly for epicutaneous use in hygienic and/or surgical hand disinfection, with an alcoholic main component comprising a fraction of at least 50 wt% and less than 80 wt% in which a minimum of one inorganic or organic acidic compound is present, the organic acidic compound being distinguished by a minimum of one carboxyl group (-COOH), **characterized in that** urea and PEG having a mean relative molecular weight of 2500-5000 are contained as adjuvants for regulating the material consistency.

2. The virucidal disinfecting agent as recited in Claim 1, **characterized in that** the urea is present as a fraction of 0.1-8 wt%, particularly 1.75-3.25 wt%.

3. The virucidal disinfecting agent as recited in one of Claims 1 and 2, **characterized in that** additionally a minimum of one zinc salt is included.

4. The virucidal disinfecting agent as recited in Claim 3, **characterized in that** the minimum of one zinc salt comprises an organic zinc salt, particularly zinc pyrrolidone carboxylate.

5. The virucidal disinfecting agent as recited in one of Claims 3 and 4, **characterized in that** the fraction of the minimum of one zinc salt is 0.2-2 wt%.

6. The virucidal disinfecting agent as recited in one of Claims 1 through 5, **characterized in that** the alcoholic main component is a monohydric alcohol with a minimum of 2 and a maximum of 4 carbon atoms, which is preferably ethanol and/or 1-propanol and/or 2-propanol.

7. The virucidal disinfecting agent as recited in one of Claims 1 through 6, **characterized in that** the minimum of one acidic compound comprises an organic acid, whereby the fraction of the organic acid is preferably 0.2-3 wt%.

8. The virucidal disinfecting agent as recited in Claim 7, **characterized in that** the minimum of one organic acid comprises lactic acid and/or glycolic acid.

9. The virucidal disinfecting agent as recited in one of Claims 1 through 8, **characterized in that** a minimum of one additional conditioning component is included, whereby particularly skin moisturizing agents, agents for elevating the suppleness of the skin and/or vitamins are present as additional conditioning components.

10. The virucidal disinfecting agent as recited in Claim 9, **characterized in that** glycerin is included as an additional conditioning component, particularly as a fraction of 0.2-1.5 wt%.

11. The virucidal disinfecting agent as recited in one of Claims 9 and 10, **characterized in that** alkoxylated glycerides are included as an additional conditioning component, particularly as a fraction of 0.2-1.5 wt%.

12. The virucidal disinfecting agent as recited in one of Claims 1 through 11, **characterized in that** a minimum of one adjuvant for the regulation of material consistency is included, whereby particularly a wax and/or a polymer is present as an adjuvant.

13. The virucidal disinfecting agent as recited in one of Claims 1 through 12, **characterized in that** poly(ethylene glycol) is present as a fraction of 0.1-5 wt%, and 0.5-1.5 wt% is particularly preferred.

14. The virucidal disinfecting agent as recited in one of Claims 1 through 13, **characterized in that** additionally at least one biocidal component is included.

15. The virucidal disinfecting agent as recited in one of Claims 1 through 14, **characterized in that** a minimum of one additive is present from the group comprising denaturing agents, coloring agents, olfactory corrigents, pH regulators, and/or solubilizing agents.

16. The virucidal disinfecting agent as recited in Claim 15, **characterized in that** monoethanolamine is included as a pH regulator.

17. The virucidal disinfecting agent as recited in one of Claims 1 through 16, **characterized in that** the virucidal disinfecting agent has a pH of at least 3.5, preferably at least 4.0.

18. Dispensing device, particularly a dispenser or spray applicator, comprising a virucidal disinfecting agent as recited in one of Claims 1 through 17.

## Revendications

1. Désinfectant virucide à base alcoolique-aqueuse, en particulier pour application épicutanée pour la désinfection hygiénique et/ou chirurgicale des mains, sachant qu'un composant alcoolique principal présente une proportion d'au moins 50 % en poids et de moins de 80% en poids et qu'il existe au moins un composé acide, qui peut être inorganique ou organique, le composé acide organique étant **caractérisé par** au moins un groupement carboxyle (-COOH), **caractérisé en ce qu'**y sont contenus de l'urée et du PEG ayant une masse moléculaire relative moyenne de 2500-5000 en tant qu'adjuvant pour la régulation de la consistance du produit.

2. Désinfectant virucide selon la revendication 1, **caractérisé en ce que** l'urée présente une proportion de 0,2 - 8% en poids, en particulier de 1,75 - 3,25 % en poids.

3. Désinfectant virucide selon l'une quelconque des revendications 1 - 2. **caractérisé en ce qu'**il contient en outre au moins un sel de zinc.

4. Désinfectant virucide selon la revendication 3, **caractérisé en ce que** le au moins un sel de zinc inclut un sel de zinc organique, en particulier un pyrrolidone carboxylate de zinc.

5. Désinfectant virucide selon l'une quelconque des revendications 3 - 4, **caractérisé en ce qu'**une proportion du au moins un sel de zinc est de 0,2 - 2 % en poids.

6. Désinfectant virucide selon l'une quelconque des revendications 1 - 5, **caractérisé en ce que** le composant alcoolique principal se compose d'alcools monovalents ayant au moins 2 et au plus 4 atomes de carbone, sachant qu'il s'agit de préférence d'éthanol et/ou de 1-propanol et/ou de 2-propanol.

7. Désinfectant virucide selon l'une quelconque des revendications 1 - 6, **caractérisé en ce que** le au moins un composé acide comprend un acide organique, sachant que la proportion de l'acide organique est de préférence de 0,2 - 3 % en poids.

8. Désinfectant virucide selon la revendication 7, **caractérisé en ce que** le au moins un acide organique contient au moins de l'acide lactique et/ou de l'acide glycolique.

9. Désinfectant virucide selon l'une quelconque des revendications 1 - 8, **caractérisé en ce qu'**il contient au moins un composant de soins de la peau supplémentaire, sachant que sont présents en tant que composants de soins de la peau supplémentaires, en particulier, des hydratants cutanés, des adjuvants en vue de l'augmentation de la souplesse de la peau et/ou des vitamines.

10. Désinfectant virucide selon la revendication 9, **caractérisé en ce qu'**il contient comme composant de soins de la peau supplémentaire de la glycérine, en particulier en une proportion de 0,2 -1,5% en poids.

11. Désinfectant virucide selon l'une quelconque des revendications 9 - 10, **caractérisé en ce qu'**il contient comme composant de soins de la peau supplémentaire des glycérides alkoxylés, en particulier en une proportion de 0,2 -1,5% en poids.

12. Désinfectant virucide selon l'une quelconque des revendications 1 - 11, **caractérisé en ce qu'**il contient au moins un adjuvant en vue de la régulation de la consistance du produit, sachant qu'est présent, en tant qu'adjuvant, en particulier une cire et/ou un polymère.

13. Désinfectant virucide selon l'une quelconque des revendications 1 - 12, **caractérisé en ce que** le polyéthylèneglycol présente une proportion de 0,1 - 5% en poids, de manière particulièrement préférée de 0,5 - 1,5% en poids.

14. Désinfectant virucide selon l'une quelconque des revendications 1 - 13, **caractérisé en ce qu'**est présent au moins un composant biocide supplémentaire.

15. Désinfectant virucide selon l'une quelconque des revendications 1 - 14, **caractérisé en ce qu'**est présent au moins un additif du groupe comprenant agents de dénaturation, agents colorants, agents de correction de l'odeur, agents régulateurs du pH et/ou agents de solubilisation.

16. Désinfectant virucide selon la revendication 15, **caractérisé en ce qu'**il contient en tant que régulateur du pH de la monoéthanolamine.

17. Désinfectant virucide selon l'une quelconque des revendications 1 - 16, **caractérisé en ce que** le désinfectant virucide présente une valeur de pH d'au moins 3,5, de préférence d'au moins 4,0.

18. Dispositif distributeur, en particulier distributeur ou applicateur de pulvérisation, contenant un désinfectant virucide selon l'une quelconque des revendications 1-17.
